# EUROPEAN PATENT APPLICATION

(11) **EP 2 765 147 A1**
(43) Date of publication of application: **13.08.2014**
(21) Application number: 13000586.1
(22) Date of filing: 06.02.2013
(51) Int. Cl.: C08G 18/66, C08G 18/08, C09D 175/04, C08G 18/42

(54) **Aqueous polyurethane dispersion derived from tertiary alkyl glycidyl esters**

(71) Applicant: Momentive Specialty Chemicals Research Belgium S.A., 1348 Ottignies Louvain-la-Neuve (BE)
(72) Inventor: Steinbrecher, Christophe, 1348 Ottignies Louvain-la-Neuve (BE); Erdem, Bedri, 1348 Ottignies Louvain-la-Neuve (BE); O'Shaughnessy, Mike, 1348 Ottignies Louvain-la-Neuve (BE); Heymans, Denis, 1348 Ottignies Louvain-la-Neuve (BE); Blaisdell, Jeff, Seekonk, MA 02771 (US)

(57) **Abstract**

This invention relates to a new class of polyester diols for Waterborne Polyurethane Dispersions (WPU) that requires less solvent for processing and film formation when prepared in stoichiometrically identical polymers than current systems. They also offer the benefit of higher hardness with reduced isocyanate demand and superior abrasion resistance when compared to other polyester diols currently available. The diols of the present invention are derived from the reaction products of either di-acids, or conventional oligomeric polyols utilizing a sequential ring opening reaction with tertiary alkyl glycidyl esters and anhydrides.

## Description

This invention relates to a Waterborne Polyurethane Dispersions (WPU) derived from a polyester diol which is non-linear in nature with a substantial amount of their Mw being present in pendant alkyl groups. The non-polar nature of these pendant groups bring unique properties to water borne systems which include lower co-solvent demand for room temperature film formation, improved hardness, higher abrasion resistance and offer the potential for reduced system cost.

Polyurethane coatings are well known in the coatings market as high performance, protective coatings. These products are well established and known in the industry as versatile products that can be tailored for a wide range of applications where exceptional performance properties such as adhesion, abrasion resistance, mar / scuff resistance, resiliency, flexibility, hardness or softness, outdoor durability and substrate protection are required. Water based polyurethane products have made significant impact in the same diverse application areas primarily due to their ability to deliver the high performance characteristics associated with polyurethane polymers while reducing the total volatile organic compound emissions in application.

Because of ever increasing environmental restrictions, water borne polyurethane dispersions have grown rapidly. In addition to lower solvent emissions, WPU's eliminate the exposure to isocyanates during application and eliminate any concerns over side reactions with the isocyanate and atmospheric moisture. Despite all their performance benefits, WPU's are under additional environmental pressure to further reduce the amounts and types of co-solvents they contain. The most common solvent, N-Methyl-2-pyrrolidone (NMP)has been used for years as a reaction medium and coalescing solvent because of its excellent coalescing power, ability to control viscosity during manufacture and non-reactivity with conventional urethane building blocks. It is however currently being eliminated from many WPU's due to concerns over health effects as it has been identified as a reproductive toxicant. Changes in legislation on the labeling of products containing N-methylpyrolidone (NMP;toxicity and reprotoxicity R phrases added) have resulted in increased efforts to replace NMP with alternative co-solvents, reduce solvent content or avoid the use of co-solvents altogether. Other coalescents that have been used as a replacement are not as effective as NMP in room temperature film formation. This results in the need for a higher level of these solvents which in turn increases the VOC content which may cause the WPU to no longer comply with environmental restrictions.

Aqueous polyurethane dispersions are used in a large variety of applications due to a well-balanced performance profile such as good flexibility and durability, good resistance to abrasion, good chemical resistance as well as good adhesion to various substrates. They can be found in adhesives, paints and coatings such as those for kitchen cabinets, wood and vinyl flooring, plastics, leather coatings, glass fiber sizing, glass coatings, automotive / transportation coatings, textile coatings etc.

As mentioned earlier, water based polyurethane products yield a significant reduction in volatile organic emissions vs. their solvent borne counter parts. There is an on-going drive to further reduce volatile organic emissions from WPU's while maintaining the desired high performance characteristics. Co-solvent free and even VOC free polyurethane products are known and available in the market today in an attempt to meet this need but all are insufficient in one or more areas like room temperature film formation and hardness.

Water based polyurethanes utilizing a di-isocyanate like TMXDI are available and yield lower Tg polymers with good film formation, but because of their low Tg do not yield films hard enough for many applications. In addition, the high cost of the TMXDI polyisocyanate entity makes it cost prohibitive for all but a few applications.

Numerous water based polyurethane systems with little to no solvent needed for room temperature film formation exist, but these systems typically utilize water base polyurethane chemistry in conjunction with alternate waterborne polymer technology such as in-situ formed acrylate emulsion polymers. Because these systems constitute hybrid polymers, i.e a physical blend of aqueous polyurethane resin and aqueous acrylic resin, the additional polymer component tends to reduce the sum of expected physico-chemical properties when compared to pure water borne polyurethanes. Although addition of acrylic polymer resins can improve outdoor durability of aforementioned hybrid resins, they do this at the cost of physical properties such as e.g. ultimate tensile strength, since the acrylic resin part lacks the same level of cohesive energy which polyurethane resins can develop due to the formation of strong hydrogen bonds between the urethane and urea groups.

A major factor impacting the broader market acceptance of all polyurethanes is the cost and the most expensive component is typically the isocyanate. Unfortunately it is the isocyanate which creates a hard segment in the polymer chain that is distributed between the soft segment which is usually constituted by di-hydroxy functional oligomers (polyols).

The manufacture of WPU's is well known in the art and the examples used follow this process which involves reacting an excess of polyisocyanate with a poly-hydroxyl compound resulting in an isocyanate terminated prepolymer. The prepolymer is then modified with water soluble entities of either a nonionic, cationic or ionic nature. The most popular method for waterborne polyurethane manufacture, well established in the art, entails the incorporation of dimethylol propionic acid (DMPA) into the prepolymer backbone to ensure subsequent water dispersibility and solubility via ion formation through neutralization of the carboxyl group with basic compounds like triethylamine. Once the prepolymer is diluted with co-solvent to suitable processing viscosity levels and made suitably hydrophilic via the salt formation at the ionic groups attached to the low molecular weight prepolymer, it is then dispersed in water and chain extended to high molecular weight WPU chains via reaction with various multifunctional amines such as hydrazine.

In the present invention it has been surprisingly found that using a hydroxyl terminated telechelic polyesters diol which contains large pendant alkyl groups laterally pendant on the chain demonstrate that WPU's of very high hardness can be made with a greatly reduced need for coalescing solvents to achieve film formation at room temperature. One attempt to reduce solvent content is outlined in WO 2006/002864 which utilizes a vinyl monomer as a diluent and method to reducing co-solvent demand. The patent describes a polyurethane dispersion containing ≤ 5 wt-% NMP by weight of polyurethane and where the polyurethane is derived from either aliphatic or aromatic isocyanate and isocyanate-reactive polyol bearing ionic and/or potentially ionic water dispersing groups and nonionic isocyanate-reactive polyols. The pre-polymerisation is performed in the presence of reactive diluents such as vinyl monomers, e.g. methyl methacrylate, ethylmethacrylate and styrene and in consequence a hybrid polyurethane vinyl polymer is obtained which requires a reduced amount of NMP as co-solvent due to the diluting effect of the vinyl monomers during the pre-polymerisation process. The reactive diluent is polymerized with suitable peroxide or persulfate catalysts after the polyurethane pre-polymer has been reacted with at least one active hydrogen chain-extending compound to form the PU polymer. It is well known that these urethane acrylic hybrid polymers while suitable for some applications cannot perform up to the level of WPU in areas like hardness, abrasion and chemical resistance.

"Preparation and properties of waterborne polyurethanes with natural dimmer fatty acids based polyester polyol as soft segment" by Xin Liu et al. , published in Progress in Organic Coatings 72 (2011), 612 - 620 describes the advantages of the incorporation of dimer fatty acids based polyester polyols such as C36 dimer Priplast polyols from Croda. Improvements in surface hydrophobicity (increase in water contact angle > 90 degree), hydrolytic resistance, water resistance and thermal resistance are reported although physico-mechanical properties, notably elongation at break were reduced by introduction of dimer fatty acid polyesters.

It is concluded that the observed improvements are effected by the incorporation of long hydrophobic branched chains and the high degree of phase separation which the PU polymer exhibited.

US 6,482,474 by D. R. Fenn et al. describes the use of a hydroxyl functional polymer which is preferably derived from a polyfunctional carboxylic acid and a monoepoxide such as Cardura E10 for use in solvent based 2 component air dry or one component baking systems. To that purpose low molecular weight polyols (Mw 66 - 150) such as ethylene glycol, propylene glycol, trimethylol propane or neopentylglycol are reacted with dicarboxylic acid anhydrides such as maleic anhydride, succinic anhydride, phtalic anhydride and hexahydrophtalic anhydride. The resulting polyfunctional acid compound has substantially the same number of acid groups as the polyol had hydroxyl groups. The ensuing reaction of the polyfunctional acid compound with the monoepoxide yields an OH-functional polyester polyol which can be further reacted with additional moles of polyfunctional acid and monoepoxide. The final hydroxylfunctional polyol is then mixed immediately before application with an isocyanate and as thus constitutes a two-component system. The polyisocyanate poly-hydroxyl mixture is cured in place in the presence of an organic solvent as opposed to water making low VOC systems impossible. The coating is used as a chip resistant sandable primer in the spot repair of automotive paints producing high quality results.

An anonymous research disclosure No. 505 033 in May 2006 in Research Disclosure titled "Glycidyl ester based telechelic polyesters" describes the step growth polymerization of hydroxyl terminated telechelic polyesters from dicarboxylic acids, dicarboxylic acid anhydrides and glycidyl esters. 1 mole of diacid is first reacted with 2 moles of glycidyl ester until at least 85 mole% conversion is achieved. The resulting diol is then reacted sequentially with n times 2 moles of dicarboxylic anhydride and then 2 moles of glycidyl ester until the desired molecular weight is achieved (n can vary from 0 to 10). The resulting polyester polyols have been found suitable to make polyurethane dispersions.

US3,607,900 by Kazy Sekmakas describes water-dispersible polyurethane resins that are provided by reacting a resinous polyol with a stoichiometric deficiency of polyisocyanate to provide hydroxyl-functional polyurethane in which carboxyl functionality is generated with a portion of the carboxyl functionality being preferably consumed by reaction with monoepoxide to generate hydroxyl ester groups remote from the backbone of said polyurethane resin. The aqueous polyurethane resins are employed in electrocoating processes in which a unidirectional electrical current is passed through the aqueous bath containing the dispersed resin to deposit at the anode of the system.

The US 6,087,444 by Shanti Swarup at al. is about an aqueous dispersions of polyurethane/acrylic polymers can be made which provide water-based coating compositions with good humidity resistance as well as adhesion. This is achieved by reacting a polyisocyanate, a polyhydroxy compound and a monomer having an anionic group and functionality reactive with isocyanate. The polyhydroxy compound is the reaction product of an organic acid and an epoxy compound, at least which includes a hydrocarbon group of at least six carbon atoms. Preferred embodiments employ C36 dimer diacid as starter and the propylene oxide ester of neodecanoic acid to make the polyhydroxy compound. The viscosity management of the intermediate prepolymer which incorporates the ionic groups and is thus very high in viscosity is achieved by using acrylic monomers as reactive diluents. After dispersion in the aqueous phase and chain extension to a waterborne PU resin the reactive diluent monomers are in-situ polymerized by addition of suitable radical initiators. The authors are not telling the reader that the invention could be used to achieve a low co-solvent composition with high hardness or abrasion resistance and the cured film contains urethane and acrylate linkages which is known to give inferior overall physico-mechanical performance.

Waterborne polyurethane dispersions (WPU) derived from a polyester diol which is non-linear in nature with a substantial amount of their Mw being present in pendant alkyl groups have shown the surprising ability to coalesce at room temperature with substantially less to zero co-solvent use while achieving higher hardness even when the component that is commonly known to impart hardness to the system (reaction of polyisocyanate and chain extender to form hard segment) is being used at reduced levels. The cured films also show substantial improvements in abrasion resistance. These properties have been demonstrated in comparative test series using stoichiometrically equivalent industry benchmarks and ladder studies where altering the level of one a component demonstrates the novel properties.

The benefits of the invention are:
- Reduced batch time to produce water dispersible intermediate prepolymer by altered pre-polymer molecular architecture which allows for faster dissolution of DMPA such shortening process batch time 40 to 60 minutes to 24 min resulting in a reduction of 40 to 60%.
- Resulting WPU's with intrinsic characteristics for self-coalescence which allows for reduced demand for co-solvent like NMP or alternative co-solvents e.g. Proglyde DMM for room temperature film formation. NMP can be eliminated from the formulation altogether and is replaced by more alternative co-solvents such as Proglyde DMM (dipropyleneglycoldimethylether) at lower amounts than required by systems using conventional diols. Unlike prior art no use of solvents (US 6,482,474) or reactive diluent such as acrylic monomers (US 6,087,444) is required neither for making the intermediate water-dispersible prepolymer nor facilitating the dispersion and chain extension of the prepolymer in the aqueous phase.
- Aqueous WPU dispersions having significantly reduced isocyanate content.
- Cured films exhibiting a higher degree of hardness compared to stoichiometrically comparable benchmarks based on standard polyester polyols (neopentylglycoladipate, hexanediol adipate, butanediol adipate, BDO initiated polycaprolactone, CHDM initiated polycarbonate polyols) thus allowing for a reduction in expensive isocyanates to obtain the same degree of hardness whilst retaining physico-mechanical properties on a similar level with reduced co-solvent levels for coalesence.
- Cured films exhibiting an improvement in abrasion resistance.

The polyurethane aqueous dispersion composition of the invention and comprising (i) a hydroxyl terminal oligomer derived from an alkyl glycidyl ester and carboxylic di-acids or anhydride, hemi-ester,(ii) a poly-isocyanate and (iii) suitable hydrophilic entity known in the art wherein the oligomer is characterized in that the molecular weight is characterized in that the molecular weight is between 600 and 5000, preferably between 800 and 3500, and most preferably between 1200 and 2800.

A embodiment of this invention is wherein the alkyl glycidyl ester is a linear or branched alkyl glycidyl ester with the alkyl group containing from 4 to 12 carbon atoms.

A preferred embodiment of this invention is wherein the branched alkyl chain is a tertiary alkyl chain with 4 to 12 carbon atoms, preferably from 8 to 10 carbon atoms and most preferably with 9 carbon atoms.

The above compositions are formulated for use with the level of co-solvent being lower than 8.6 weight% on total wet composition and preferentially the composition is free of N-methylpyrolidone.

The compositions of this invention are formulated with a level of isocyanate between 7.5 and 17.5 weight% on total composition.

Another embodiment of this invention is that the hydroxyl terminal oligomer is a diol derived from an alkyl glycidyl ester and carboxylic di-acids or anhydride, hemi-ester and a poly-isocyanate, wherein the oligomer is characterized in that the molecular weight is between 600 and 5000, preferably between 800 and 3500, and most preferably between 1200 and 2800.

The alkyl glycidyl ester can be with a linear alkyl chain such as glycidyl esters of C-6 to C-20 fatty acids or with a branched alkyl chain such as glycidyl neodecanoate.

The most preferred glycidyl ester monomers are commercially available from Momentive Specialty Chemicals Inc. as Cardura 10, Cardura 9, Cardura 13 and Cardura 5 (glycidyl pivalate).

The polyisocyanate may be dicyclohexylmethane diisocyanate, isophorone diisocyanate, hexane diisocyanate, tetramethylxylene diisocyanate, toluene diisocyanate, diphenylmethane diisocyanate,dimers, trimers and other high functionality adducts of hexamethylenediisocyanate including hydrophilically modified adducts, dimers, trimers and other high functionality adducts of isophorone diisocyanate including hydrophilically modified adducts, polymethylene polyphenylene polyisocyanate, carbodiimide modified diphenylmethane diisocyanate, toluene diisocyanate trimmers or, combinations thereof and wherein the diisocyanate is more preferably dicyclohexylmethane diisocyanate.

The polyol component used as a mixture of polyols such as polyesters, polycaprolactones, polycarbonates, polyethers, and polyfunctional hydroxy compounds such as ethylene glycol, butanediol, propylene glycol, hexanediol, methyl propane diol, butyl ethyl propane diol, trimethyol propane, trimethyloethane, pentaerythritol and other short chain polyhydroxy compounds known in the art.

Cardura polyols are prepared as taught in the anonymous research disclosure and Momentive Specialty Chemical brochure "Cardura E10P - Low Viscosity Diol and Triol Polyesters", 2006 Momentive Specialty Chemicals Inc.

Polyurethane dispersions were prepared as detailed in the next section. As industry benchmark Sancure 815 was chosen, this product currently has 8.5% NMP and while it does help in processing, it is also needed for film formation. These products utilize a hexane diol / neopentyl glycol / adipic acid diol. In addition to the diol, these products utilize Desmodur W (H12MDI) as the isocyanate, DMPA to introduce the acid functionality and are chain extended by amines selected from the classes of aliphatic polyfunctional amines, aromatic polyfunctional amines, blocked amines, amino alcohols, polyether amines, and water, and preferably an aliphatic diamine and more preferably hydrazine.

Wet dispersions and cured film of Cardura polyester based experimental PUDs and industry benchmark were subjected to below mentioned test regimen. The primary application purpose of experimental coatings was in clear wood coatings, but by modifying the composition of the polyhydroxy compound it is possible to modulate performance attributes over a wide range and thus make the invention also useful in adhesives, paints and coatings such as those for kitchen cabinets, wood and vinyl flooring, plastics, leather coatings, glass fiber sizing, glass coatings, automotive / transportation coatings, textile coatings, light-duty atmospheric corrosion protection etc.
● Wet dispersion properties
   - Viscosity, solids content (Attempt equal 34% Total Solids Content (TSC) to equate to SANCURE 815T), pH, appearance, heat age stability, freeze/thaw stability
● Dry film properties
   - Air dry 24 hours/oven dry 150°C/2 minutes
   - Record 100% modulus, ultimate tensile, ultimate elongation, softening point, film clarity
   - Abrasion resistance using ASTM D4060
● Air dry Koenig hardness development
   - #40 rod on glass air dried RT recorded over 10 day-period
● Hydrolysis resistance
   - Record differences in modulus, ultimate tensile, ultimate elongation after dry film exposure to ASTM D2247 "Standard practice for testing water resistance of coatings in 100% relative Humidity"

Manufacture of water based polyurethane utilizing Cardura polyol as the di-hydroxyl component in place of common polyester polyols such as hexanediol adipate polyester polyols, butanediol adipate polyester polyols, hexane/neopentyl adipate polyester polyols or butanediol initiated polycaprolactone polyols and maintaining all other reactants at equivalent weight levels comparatively yields:
● 28 to 100% reduction in co-solvent demand required for film formation at room temperature
● 120 - 129% increase in surface hardness as measured by Koenig hardness
● 65 - 85% improvement in abrasion resistance
● Manufacture of water base polyurethane utilizing Cardura polyol as the di-hydroxyl component in place of CHDM initiated polycarbonate polyol and maintaining all other reactants at equivalent weight levels comparatively yields:
   ● 47.9% reduction in co-solvent demand required for film formation at room temperature
   ● 2 - 3% increase in surface hardness as measured by Koenig hardness
   ● 0 - 46% improvement in abrasion resistance.

Use of Cardura polyols addresses the need for reduced co-solvent demand for room temperature film formation while supplying increased surface hardness at equal isocyanate content and/or decreased isocyanate demand for equal surface hardness resulting in reduced cost, and, maintaining equal or producing improved abrasion resistance properties.

The composition of the invention wherein the weight % level of co-solvent required for film formation at 25°C of the resulting polyurethane polymer is 35 to 60 % lower than stoichiometrically equivalent polyurethane systems utilizing hexane-neopentyl adipate polyester or BDO initiated polycaprolactone or CHDM initiated polycarbonate as the polyol component.

The composition according to the invention and wherein the Koenig Hardness of the resulting polyurethane polymer is 83 to 124% higher than stoichiometrically equivalent polyurethane systems utilizing hexane-neopentyl adipate polyester or BDO initiated polycaprolactone as the polyol component.

The composition according to the invention and wherein the Koenig Hardness of the resulting polyurethane polymer is 2 to 3% higher, and, the weight % level of co-solvent required for film formation at 25°C of the resulting polyurethane polymer is 55 to 60% lower than stoichiometrically equivalent polyurethane systems utilizing CHDM initiated polycarbonate as the polyol component.

The composition according to the invention and wherein the Taber Abrasion resistance measured as mg loss/1000 cycles yields between 49 to 84% reduction in mg loss comparative to stoichiometrically equivalent polyurethane systems utilizing hexane-neopentyl adipate polyester or BDO initiated polycaprolactone as the polyol component.

The composition according to the invention and wherein the Taber abrasion resistance measured as mg loss/1000 cycles yields between 10 to 15% reduction in mg loss comparative to stoichiometrically equivalent polyurethane systems utilizing CHDM initiated polycarbonate as the polyol component.

The composition according to the invention and wherein the resulting polyurethane film may yield approximately equivalent Koenig Hardness and 40-46% reduction in co-solvent required for film formation at 25°C and 20-22% reduction in polyisocyanate required as compared to a system utilizing hexanediol-neopentyl glycol polyester polyol component.

### EXAMPLES

### Example 1

To a clean, dry reactor vessel add 138.51 grams of dicyclohexylmethane diisocyanate (H12MDI) and 199.29 grams of 1258 molecular weight hydroxyl terminal polyester diol derived from the reaction products of tertiary alkyl glycidyl esters. Start mixing and heat the mixture to 77°C (170°F). Start a nitrogen bleed into the head space of the reactor vessel. With heating on low charge 0.017 grams stannous octoate catalyst. Allow the reaction mixture to exotherm resulting in increased internal batch temperature to 110-121°C (230-250°F) with heating off. Allow reaction mixture to begin cooling while removing and testing an aliquot for complete reaction of the polyisocyanate with the polyester to yield a maximum amount of residual polyisocyanate content of 9.19%. Upon confirmation of completeness of reaction charge 48.00 grams of dipropylene glycol dimethyl ether co-solvent. Adjust the internal batch temperature to 93°C (200°F). Charge 14.17 grams of dimethylol propionic acid. Hold the internal batch temperature at 88-96°C (190-205°F). Approximately 20 minutes after charging the dimethylol propionic Acid test an aliquot of the reaction mixture for complete reaction of the residual polyisocyanate with the dimethylol propionic Acid to yield a maximum amount of residual polyisocyanate content of 5.54%. Upon confirmation of completeness of reaction cool the reaction mixture to 175F. To the reaction mixture at 79.5°C (175°F) add 10.6 grams of triethylamine neutralizing agent. To a separate vessel add 520.63 grams of water at 35-40.5°C(95-105°F) and 0.09 grams of DeeFo PI40 defoamer (supplied by Munzing). Start agitation in the water containing vessel. Slowly add 359.36 grams of the reaction mixture to the water allowing incorporation and dispersion of the reaction mixture into the water over a 3-7 minute period. Mix the dispersion for 10-20 minutes after complete addition of the reaction mixture. To the dispersion add 10.23 grams of 64% hydrazine hydrate diluted with water to 35% solids content. Mix for 10-15 minutes after addition of the hydrazine hydrate and test a small aliquot for residual isocyanate content via FTIR analysis (2250^{-1cm} peak). Mix to complete elimination of the residual isocyanate peak as determined by FTIR. The resulting dispersion has a polyurethane solids content of 35% by weight and a polyurethane solids composition of 38.53% polyisocyanate, 55.43% polyester polyol, 3.94% dimethylol propionic acid, 2.08% hydrazine. As produced the dispersion contains 13.35% dipropylene glycol monomethyl ether co-solvent based upon polyurethane solids content.

Upon complete elimination of the residual isocyanate peak as determined by FTIR analysis allow the liquid dispersion to equilibrate to 21.1°C (70°F) temperature. Test the liquid dispersion for film formation at 21.1°C (70°F) and 50% Relative Humidity by applying a 254 microns wet (10 wet mil) film of the dispersion to clean glass at 21.1°C (70°F) temperature and allowing the film to air dry. Determination of coalescence is made by visual observation of the elimination of film 'cracks' and fractures upon air dry of a 254 microns wet (10 wet mils)film on glass at 50% relative humidity and 21.1°C (70°F) temperature. Post add stepwise additions of dipropylene glycol dimethyl ether and record the total amount of additional dipropylene glycol dimethyl ether required to create film formation as described at 21.1°C (70°F) and 50% relative humidity.

Upon establishment of dipropylene glycol dimethyl ether content required for coalescence use wet solutions with added co-solvent at determined levels to test resulting films for the following:
i. Modulus, tensile and elongation of films coated at 254 microns wet (10 wet mils) on glass and oven dried for 3 minutes at 150°C.
ii. Abrasion resistance via ASTM D4060 recording milligrams loss in weight at 1000 abrasion cycles using Taber Abrader with CS-17 wheel, 1000 gram weight on coated birch wood panels.
iii. Koenig hardness on films coated to glass using #40 Meyer Rod and cured as described in results.

A.Equivalent polymer charge and preparation and testing as described in Example 1 replacing the 1258 molecular weight hydroxyl terminal polyester diol derived from the reaction products of tertiary alkyl glycidyl esters with polyester diol based upon hexane-neopentyl adipate blended to 1258 molecular weight. Suitable polyols are well known in the art and examples of such are Piothane 67-1000 and Piothane 67-3000 supplied by Pioneer resins, Rucoflex 1015-120, Rucoflex 1015-35 supplied by Bayer.
B.Equivalent polymer charge and preparation and testing as described in Example 1 replacing the 1258 molecular weight hydroxyl terminal polyester diol derived from the reaction products of tertiary alkyl glycidyl esters with polycaprolactone diol based upon butanediol initiated polycaprolactone polyol blended to 1258 molecular weight. Suitable polyols are well known in the art and an example of such are CAPA 2200 and CAPA 2100 supplied by Perstorp.
C.Equivalent polymer charge and preparation and testing as described in Example 1 replacing the 1258 molecular weight hydroxyl terminal polyester diol derived from the reaction products of tertiary alkyl glycidyl esters with polycarbonate diol based CHDM initiated polycarbonate polyol blended to 1258 molecular weight. Suitable polyols are well known in the art and examples of such are PC1667 supplied by STAHL USA.

Processing and test results for Example 1 and versions A, B and C are as follows:

| Test System | Example 1 | Version A | Version B | Version C |
|---|---|---|---|---|
| Polyol Type | Hydroxyl Terminal Polyester Diol derived from the reaction products of tertiary alkyl glycidyl esters | Hexane-Neopentyl Adipate | Butanediol Initiated Polycaprol actone | CHDM Initiated Polycarbonate |
| Polyol Molecular Weight | 1258 | 1258 | 1258 | 1258 |
| Prepolymer Viscosity @ 77°C (170°F) and 88% Prepolymer Solids Content | 4,500 cps* | 4,500 cps* | 4,500 cps* | 4,500 cps* |
| DMPA Cook Time @ 88-96°C (190-205°F) | 24 minutes | 40 min | 60 min | 54 min |
| % DMM Cosolvent required for coalescence at 21.1°C (70°F) and 50% RH based upon polyurethane solids content | 20.69% | 38.76% | 39.23% | 51.99% |
| Koenig Hardness #40 rod on glass air dried 30 minutes 21.1°C (70°F) and oven dried 4 hours @ 60C. Koenig Hardness recorded at 21.1°C (70°F) /50% RH | 108 | 49 | 47 | 105 |
| Taber Abrasion mg loss per 1000 cycles CS-17 wheel, 1000 gram weight, 21.1°C (70°F)and 50% RH | 11.05 mg | 69.00 mg | 37.65 mg | 12.95 mg |

| Film Properties of 254 microns wet (10 wet mil) film coated to glass, air dried 10 minutes 21.1°C (70°F), oven dried 3 minutes 150°C. Removed from glass and air dried 7 days 21.1°C (70°F) and 50%RH. | | | | |
|---|---|---|---|---|
| 100% Modulus | 2667psi | 1588psi | 1603psi | 3510psi |
| Tensile at Break | 3231psi | 2152psi | 2552psi | 4107psi |
| Elongation | 149% | 222% | 202% | 141% |

| Polyurethane Backbone Composition | | | | |
|---|---|---|---|---|
| % Dicyclohexylmethane Diisocyanate | 38.53 | 38.53 | 38.53 | 38.53 |
| %Polyester Diol | 55.43 | 55.43 | 55.43 | 55.43 |
| %Dimethylol Propionic Acid | 3.94 | 3.94 | 3.94 | 3.94 |
| %Hydrazine | 2.08 | 2.08 | 2.08 | 2.08 |

| | | | | |
|---|---|---|---|---|
| *: BKFLD RVT #4@20@ 77°C (170°F) | | | | |

Test results indicate that the use of hydroxyl terminal polyester diol derived from the reaction products of tertiary alkyl glycidyl esters in the preparation of a water based polyurethane can yield the unique resulting property attributes of reduced co-solvent coalescent demand required for film formation at room temperature, increased film penetration hardness, improved abrasion resistance as compared to stoichiometrically equivalent polyurethane systems utilizing polyester diols that are currently commercially available in the industry and well known to the art. In a second embodiment of this invention a comparison was made between an industry standard hard waterbase polyurethane resin and a stochiometrically equivalent system using equivalent Molecular Weight Hydroxyl Terminal Polyester Diol derived from the reaction products of tertiary alkyl glycidyl esters, and, a lower content polyisocyanate containing system utilizing higher content and higher molecular weight Hydroxyl Terminal Polyester Diol derived from the reaction products of tertiary alkyl glycidyl esters as follows.

### Example 2

To a clean, dry reactor vessel add 162.71 grams of Dicyclohexylmethane Diisocyanate (H12MDI) and 134.37 grams of 962.76 Molecular Weight Hydroxyl Terminal Polyester Diol derived from the reaction products of tertiary alkyl glycidyl esters. Start mixing and heat the mixture to 77°C (170°F). Start a nitrogen bleed into the head space of the reactor vessel. With heating on low charge 0.035 grams Stannous Octoate catalyst. Allow the reaction mixture to exotherm resulting in increased internal batch temperature to 104-110°C (220-230°F) with heating off. Allow reaction mixture to begin cooling while removing and testing an aliquot for complete reaction of the polyisocyanate with the polyester to yield a maximum amount of residual polyisocyanate content of 13.59%. Upon confirmation of completeness of reaction charge 90.00 grams of n-Methyl Pyrrolidone cosolvent. Adjust the internal batch temperature to 93°C (200°F). Charge 22.90 grams of Dimethylol Propionic Acid. Hold the internal batch temperature at 88-96°C (190-205°F). Approximately 20 minutes after charging the Dimethylol Propionic Acid test an aliquot of the reaction mixture for complete reaction of the residual polyisocyanate with the Dimethylol Propionic Acid to yield a maximum amount of residual polyisocyanate content of 6.51%. Upon confirmation of completeness of reaction cool the reaction mixture to 66-68.5°C (150-155°F).

To the reaction mixture at 68.5°C (155°F) add 16.40 grams of Triethylamine neutralizing agent. To a separate vessel add 463.12 grams of water at 18.3-23.9°C (65-75°F) and 0.18 grams of Dehydran 1292 defoamer (supplied by Henkel) and 1.48 grams of Surfynol 485 surfactant (supplied by Air Products). Start agitation in the water containing vessel. Slowly add 385.17 grams of the reaction mixture to the water allowing incorporation and dispersion of the reaction mixture into the water over a 3-7 minute period. Mix the dispersion for 10-20 minutes after complete addition of the reaction mixture. To the dispersion add 23.16 grams of 35% Hydrazine Hydrate. Mix for 10-15 minutes after addition of the hydrazine hydrate and test a small aliquot for residual isocyanate content via FTIR analysis (2250 ^{-1cm} peak). Mix to complete elimination of the residual isocyanate peak as determined by FTIR. The resulting dispersion has a polyurethane solids content of 35% by weight and a polyurethane solids composition of 49.19% Polyisocyanate, 40.62% Polyester Polyol, 6.92% Dimethylol Propionic Acid, 2.65% Hydrazine. As produced the dispersion contains 24.19% n-Methyl Pyrrolidone cosolvent based upon polyurethane solids content. As produced this final dispersion demonstrated film formation at 21.1°C (70°F)/50% Relative Humidity by applying a 254 microns (10 wet) mil film of the dispersion to clean glass at 21.1°C (70°F)temperature and allowing the film to air dry without cracks or fracture in the final film.
A. An equivalent polymer charge and preparation as described in Example 2 replacing the 962.76 Molecular Weight Hydroxyl Terminal Polyester Diol derived from the reaction products of tertiary alkyl glycidyl esters with polyester diol based upon hexane-neopentyl adipate blended to 962.76 Molecular Weight. Suitable polyols are well known in the art and examples of such are Piothane 67-1000 and Piothane 67-3000 supplied by Pioneer resins, Rucoflex 1015-120, Rucoflex 1015-35 supplied by Bayer. The resulting dispersion has a polyurethane solids content of 35% by weight and a polyurethane solids composition of 49.19% Polyisocyanate, 40.62% Polyester Polyol, 6.92% Dimethylol Propionic Acid, 2.65% Hydrazine. As produced the dispersion contains 24.19% n-Methyl Pyrrolidone cosolvent based upon polyurethane solids content. As produced this final dispersion demonstrated film formation at 21.1°C (70-°F)/50% Relative Humidity by applying a 10 wet mil film of the dispersion to clean glass at 21.1°C (70°F) temperature and allowing the film to air dry without cracks or fracture in the final film.
B. To a clean, dry reactor vessel add 159.91 grams of Dicyclohexylmethane Diisocyanate (H12MDI) and 176.98 grams of 1258 Molecular Weight Hydroxyl Terminal Polyester Diol derived from the reaction products of tertiary alkyl glycidal esters. Start mixing and heat the mixture to 77°C (170°F). Start a nitrogen bleed into the head space of the reactor vessel. With heating on low charge 0.036 grams Stannous Octoate catalyst. Allow the reaction mixture to exotherm resulting in increased internal batch temperature to 104-110°C (220-230°F) with heating off. Allow reaction mixture to begin cooling while removing and testing an aliquot for complete reaction of the polyisocyanate with the polyester to yield a maximum amount of residual polyisocyanate content of 11.69%. Upon confirmation of completeness of reaction charge 40 grams of n-Methyl Pyrrolidone cosolvent. Adjust the internal batch temperature to 93°C (200°F). Charge 23.08 grams of Dimethylol Propionic Acid. Hold the internal batch temperature at 88-96°C (190-205°F). Approximately 20 minutes after charging the Dimethylol Propionic Acid test an aliquot of the reaction mixture for complete reaction of the residual polyisocyanate with the Dimethylol Propionic Acid to yield a maximum amount of residual polyisocyanate content of 6.24%. Upon confirmation of completeness of reaction cool the reaction mixture to 77-79.5°C (170-175°F).

To the reaction mixture at 79.5°C (175°F) add 16.92 grams of Triethylamine neutralizing agent. To a separate vessel add 568.87 grams of water at 18.3-23.9°C (65-75°F) and 0.49 grams of Dehydran 1292 defoamer (supplied by Henkel) and 1.67 grams of Surfynol 485 surfactant (supplied by Air Products). Start agitation in the water containing vessel. Slowly add 385.65 grams of the reaction mixture to the water allowing incorporation and dispersion of the reaction mixture into the water over a 3-7 minute period. Mix the dispersion for 10-20 minutes after complete addition of the reaction mixture. To the dispersion add 12.02 grams of 64% Hydrazine Hydrate diluted to 35% hydrazine content with water. Mix for 10-15 minutes after addition of the hydrazine hydrate and test a small aliquot for residual isocyanate content via FTIR analysis (2250 ^{-1cm} peak). Mix to complete elimination of the residual isocyanate peak as determined by FTIR. The resulting dispersion has a polyurethane solids content of 35% by weight and a polyurethane solids composition of 43.18% Polyisocyanate, 47.79% Polyester Polyol, 6.23% Dimethylol Propionic Acid, 2.24% Hydrazine. As produced the dispersion contains 10.80% n-Methyl Pyrrolidone cosolvent based upon polyurethane solids content.

Upon complete elimination of the residual isocyanate peak as determined by FTIR analysis allow the liquid dispersion to equilibrate to 21.1°C (70°F) temperature. Test the liquid dispersion for film formation at 21.1°C (70°F) /50% Relative Humidity by applying a 254 microns (10 mil) wet film of the dispersion to clean glass at 21.1°C (70°F) temperature and allowing the film to air dry. Determination of coalescence is made by visual observation of the elimination of film 'cracks' and fractures upon air dry of a 254 microns (10 wet) mil film on glass at 50% Relative Humidity and 21.1°C (70°F) temperature. Post add stepwise additions of dipropylene glycol dimethyl ether cosolvent and record the total amount of additional dipropylene glycol dimethyl ether cosolvent required to create film formation as described at 21.1°C (70°F) and 50% Relative Humidity.

Upon establishment of cosolvent levels added as required for coalescence use wet solutions with added cosolvent at determined levels to determine wet dispersion properties for Brookfield Viscosity at 25°C, pH, Gravimetric Total Solids content, appearance, weight/gallon @ 25°C, heat age stability after exposure to 49°C (120°F) for 10 days, freeze/thaw stability upon cycling -10°C to 25°C for 3 cycles. Compound all 3 systems equivalently as follows:
Polyurethane Dispersion 100 parts
Water to 30% Total Polyurethane Solids Content
Flow and Defoaming additives added as follows based upon total weight of Dispersion at 30% solids
   - Surfynol 104H supplied by Air Products 0.5%
   - Sufynol DF110L Defoamer Supplied by Air Product 0.3%
   - BYK 348 Flow Additive supplied by BYK 0.15%
   - Surfynol DF70 Defoamer supplied by Air Products 0.01%
   - Michelman Wax 44730 supplied by Michelman 1.0%

Record wet solution properties of all compounded systems as viscosity (Zahn#2 @25°C), pH, Appearance, weight/3.785 liter (gallon) @ 25°C, Gravimetric Total Solids Content by weight after 2 hour bake at 150°C. Proceed to test the compounded solutions as follows:
i. Modulus, Tensile and Elongation of films coated at 10 wet mils on glass and oven dried for 3 minutes at 150°C.
ii. Hydrolysis Resistance of 10 wet mil films as determined by ASTM D2247 Standard Practice for Testing Water Resistance of Coatings in 100% Relative humidity.
iii. Abrasion Resistance via ASTM D4060 recording milligrams loss in weight at 1000 abrasion cycles using Taber Abrader with CS-17 wheel, 1000 gram weight on coated Birch wood panels.
iv. Koenig hardness on films coated to glass using #40 Meyer Rod and cured as described in results.
v. Application testing for wood coating analysis including Gardner Gloss of 3 brush coats on maple wood panels, Gardner Dry Time of 152.4 microns (6 wet mil)films on glass at 21.1°C (70°F)/50% Relative Humidity, crosshatch adhesion, spot chemical resistance of 3 brush coats on maple wood after 7 days air dry.

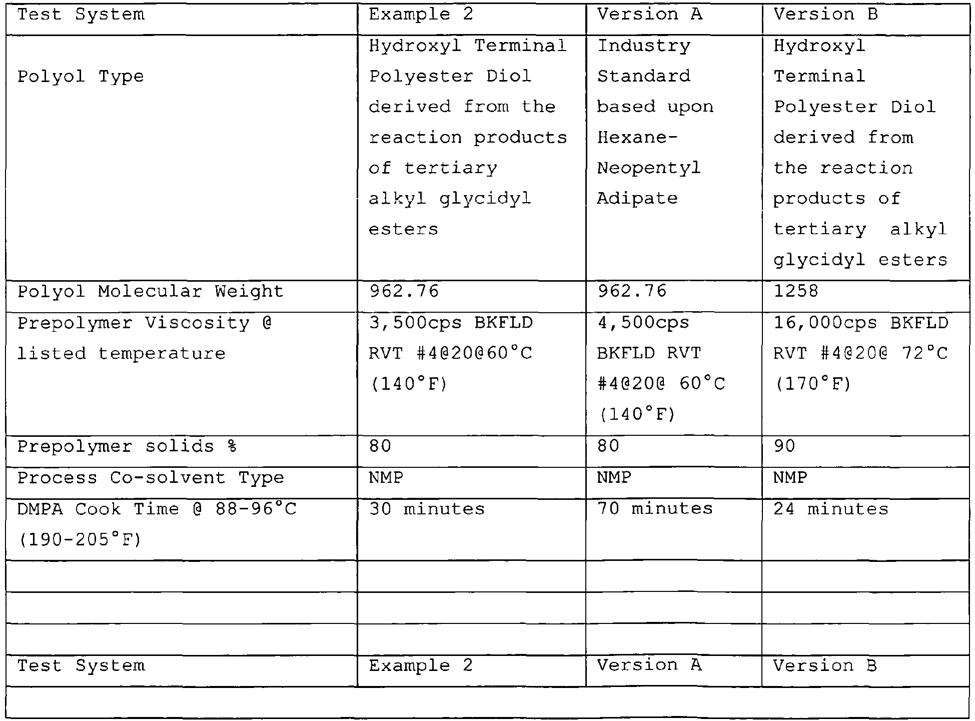

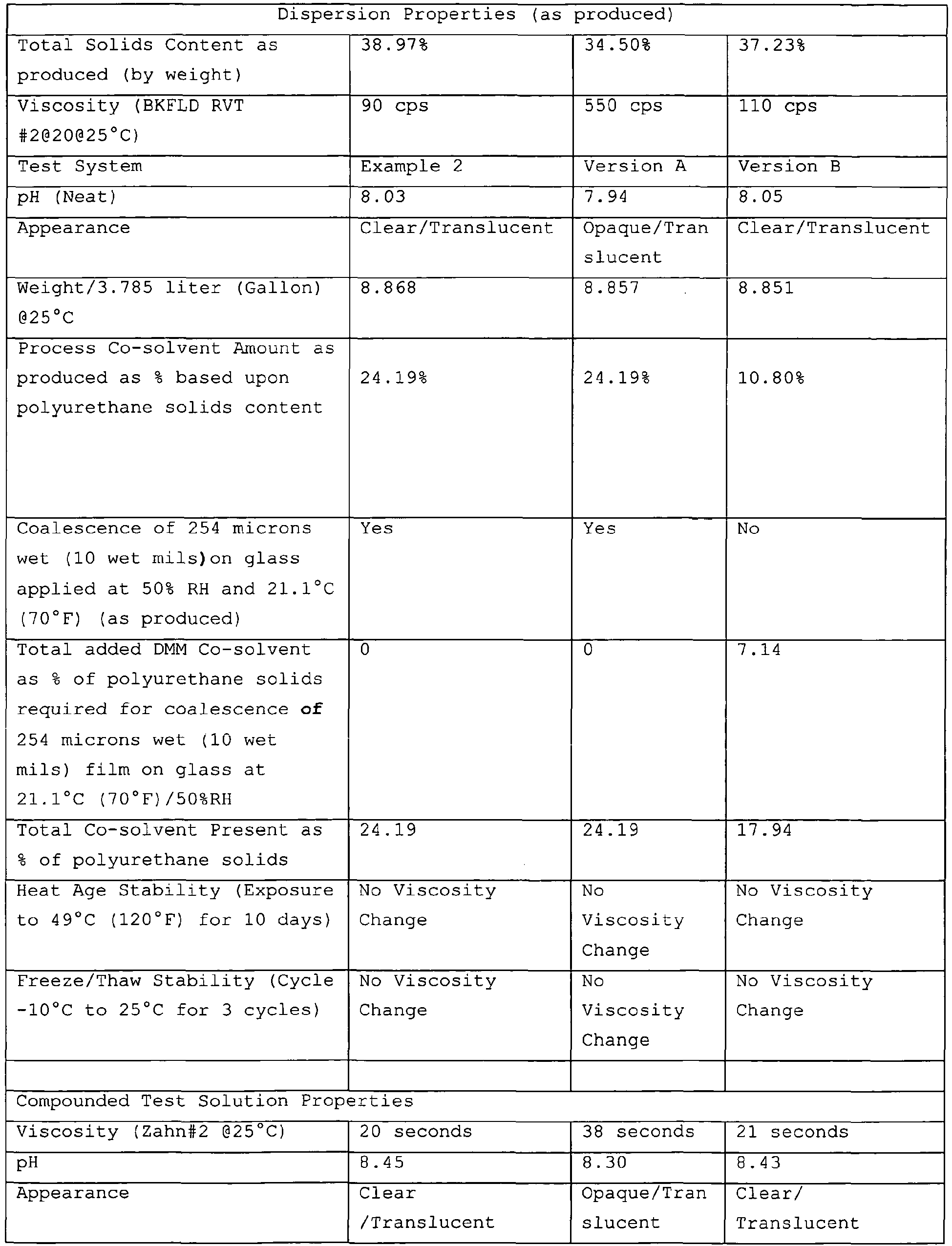

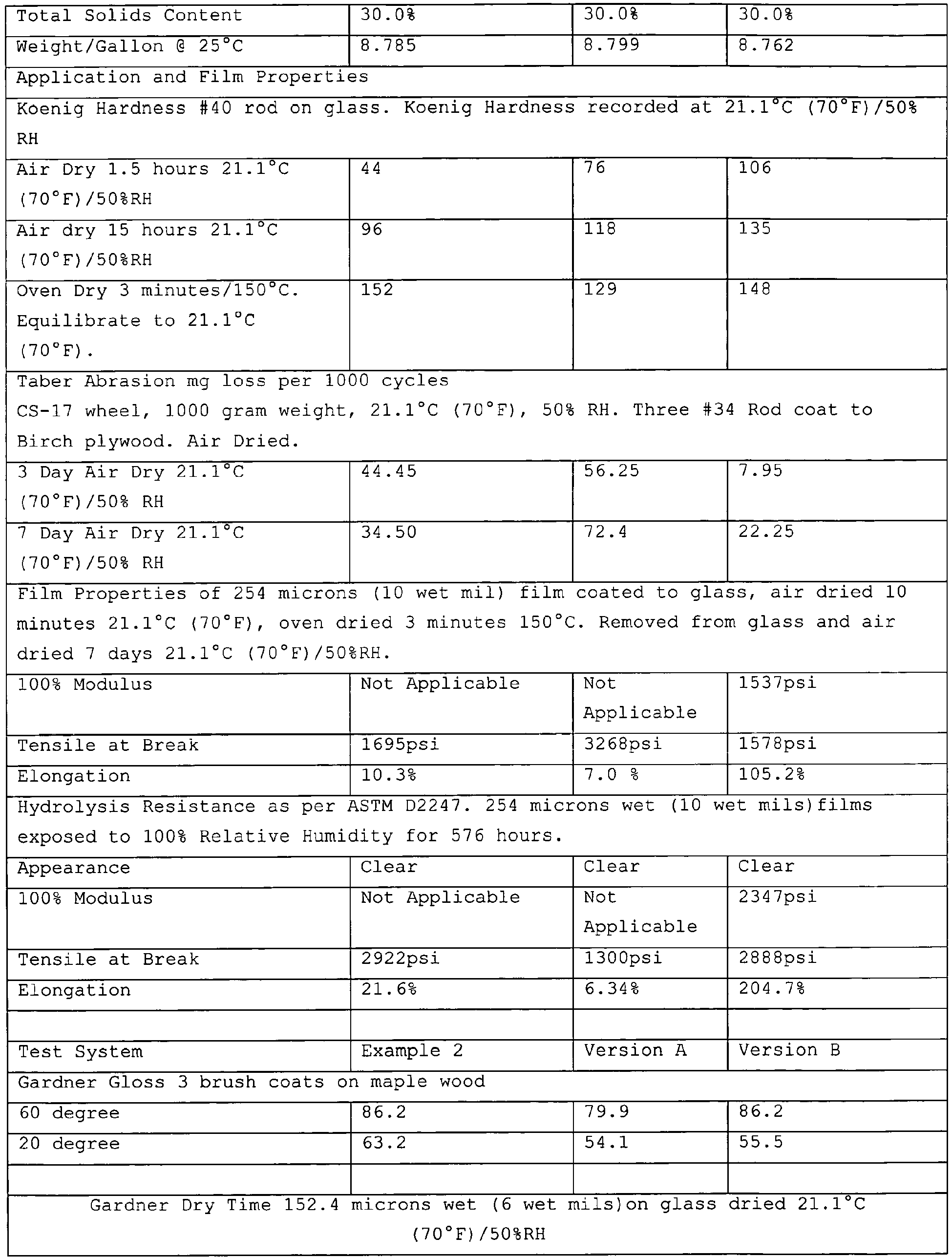

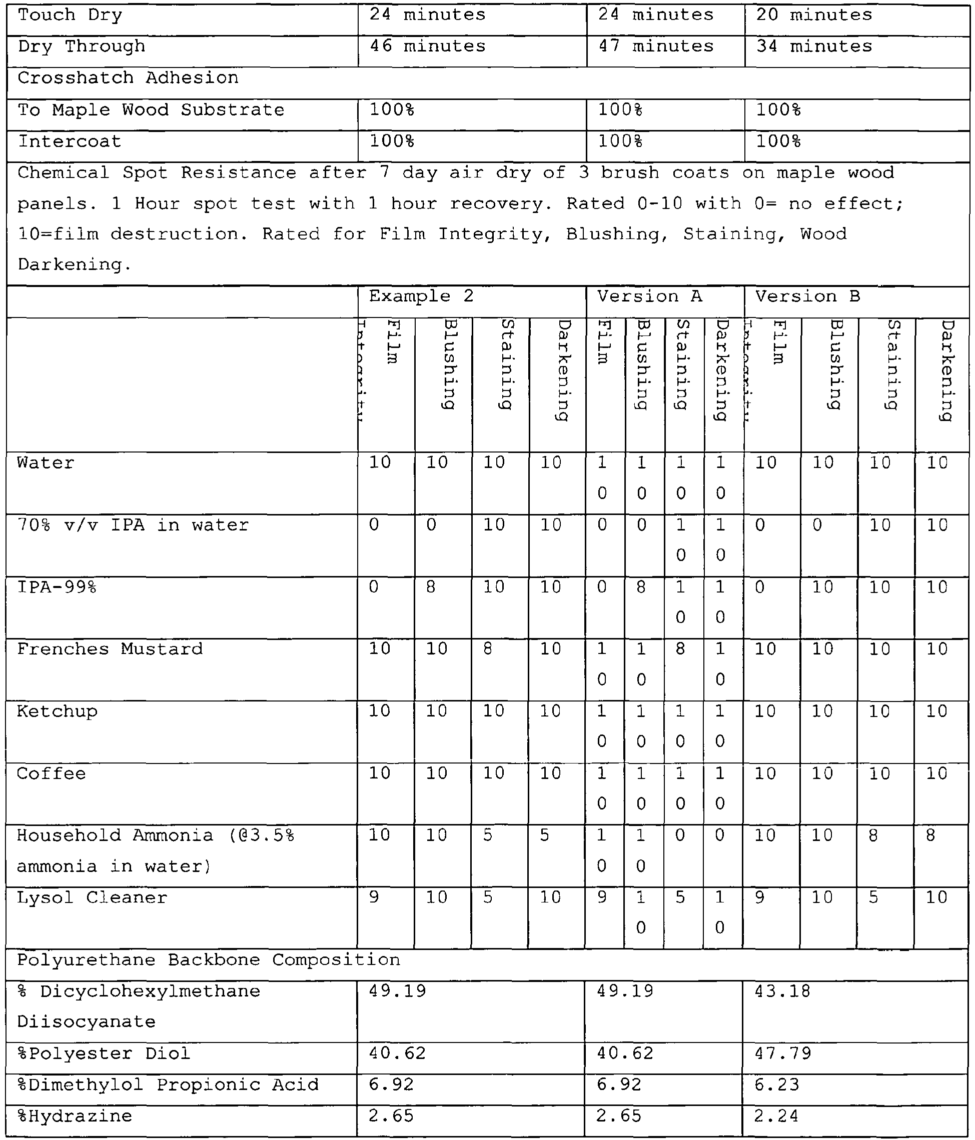

Test results indicate that the use of Hydroxyl Terminal Polyester Diol derived from the reaction products of tertiary alkyl glycidyl esters in the preparation of a water based polyurethane can yield the unique resulting property attributes of reduced co-solvent coalescent demand required for film formation at room temperature, increased film penetration hardness, improved abrasion resistance as compared to stoichiometrically equivalent industry standard polyurethane systems utilizing polyester diols that are currently commercially available in the industry and well known to the art. In addition the data demonstrates the ability of the Hydroxyl Terminal Polyester Diol derived from the reaction products of tertiary alkyl glycidyl esters used in the preparation of a waterbase polyurethane to achieve significant improvement in such properties as compared to the industry standard while diminishing the total polyisocyanate content usage resulting in lower polyisocyanate demand for achievement of similar or enhanced final use properties.

## Claims

1. A polyurethane aqueous dispersion composition comprising a hydroxyl terminal oligomer derived from an alkyl glycidyl ester and carboxylic di-acids and anhydride, or an alkyl diols and anhydride and an alkyl glycidyl ester, hemi-ester and a poly-isocyanate and a water dispersing component and a chain extender component, wherein the oligomer is **characterized in that** the molecular weight is between 600 and 5000, preferably between 800 and 3500, and most preferably between 1200 and 2800 and free of (meth)acrylic derivatives.

2. The composition of claim 1 wherein the alkyl glycidyl ester is a linear or branched alkyl glycidyl ester with the alkyl group containing from 4 to 12 carbon atoms.

3. The composition of claims 1-2 wherein the branched alkyl chain is a tertiary alkyl chain with 4 to 12 carbon atoms, preferably from 8 to 10 carbon atoms and most preferably with 9 carbon atoms.

4. The composition of claims 1 to 3 wherein the polyisocyanate may be dicyclohexylmethane diisocyanate, isophorone diisocyanate, hexane diisocyanate, tetramethylxylene diisocyanate, toluene diisocyanate, diphenylmethane diisocyanate, dimers, trimers and other high functionality adducts of hexamethylenediisocyanate including hydrophilically modified adducts, dimers, trimers and other high functionality adducts of isophorone diisocyanate including hydrophilically modified adducts, polymethylene polyphenylene polyisocyanate, carbodiimide modified diphenylmethane diisocyanate, toluene diisocyanate trimmers or, combinations thereof and wherein the diisocyanate is more preferably dicyclohexylmethane diisocyanate.

5. The composition of claims 1 to 4 wherein the polyisocyanate content is between 25 to 50 weight % on total polyurethane solids content.

6. The composition of claims 1 to 5 wherein the polyisocyanate content is preferably between 27 to 48 weight %, and more preferably between 38 to 44 weight % based upon total polyurethane solids content.

7. The composition of claims 1 to 6 wherein the water dispersing component may be anionic or cationic or nonionic or combinations thereof.

8. The composition of claims 1 to 7 wherein the polyol component is comprised of a hydroxyl terminal oligomer derived from an alkyl glycidyl ester and carboxylic di-acids and anhydride, wherein the alkyl chain is a tertiary alkyl chain with 4 to 12 carbon atoms, preferably from 8 to 10 carbon atoms and most preferably with 9 carbon atoms.

9. The composition of claims 1 to 8 wherein the polyol component used as a mixture of polyols such as polyesters, polycaprolactones, polycarbonates, polyethers, and polyfunctional hydroxy compounds such as ethylene glycol, butanediol, propylene glycol, hexanediol, methyl propane diol, butyl ethyl propane diol, trimethyol propane, trimethyloethane, pentaerythritol and other short chain polyhydroxy compounds known in the art.

10. The composition of claims 1 to 9 wherein the polyol component is between 25 to 60 weight% based upon total polyurethane solids content.

11. The composition of claims 1 to 10 wherein the chain extender component used may be selected from the classes of aliphatic polyfunctional amines, aromatic polyfunctional amines, blocked amines, amino alcohols, polyether amines, and water, and preferably an aliphatic diamine and more preferably hydrazine.

12. The composition of claims 1 to 11 wherein the level of co-solvent is lower than 25.5 weight% on total polyurethane solids content.

13. The composition of claims 1 to 11 wherein the composition is preferably free of n-methylpyrolidone.

14. The coating based on composition of claims 1 to 13 wherein the inherent coalescence is improved and with a cured film having a higher Koenig hardness and superior abrasion resistance compared to a stoichiometrically equivalent industry standard.

15. The coating of claim 14 comprising 25-50 weight% diisocyanate and more preferably 38-44 weight % dicyclohexylmethane diisocyanate, 25-60 weight % Polyol component, and more preferably 49 - 56 weight % Polyol component, as branched alkyl chain which is a tertiary alkyl chain with 4 to 12 carbon atoms, preferably from 8 to 10 carbon atoms and most preferably with 9 carbon atoms.
